# FASCICULE DE BREVET EUROPEEN

(11) **EP 2 457 792 B1**
(45) Date de publication et mention de la délivrance du brevet: **22.05.2013**
(21) Numéro de dépôt: 11190508.9
(22) Date de dépôt: 24.11.2011
(51) Int. Cl.: B60W 30/14, B60K 31/04

(54) **Dispositif de pilotage et véhicule equipé d'un tel dispositif**
Lenkvorrichtung und mit einer solchen Vorrichtung ausgestattetes Fahrzeug
Piloting device and vehicle equipped with such a device

(30) Priorité: 25.11.2010 FR 1059727
(43) Date de publication de la demande: 30.05.2012
(73) Titulaire: Sojadis Equipement, 49510 Jallais (FR)
(72) Inventeur: Humeau, Jean-Marie, 49510 JALLAIS (FR)
(74) Mandataire: Godineau, Valérie

(56) Documents cités:
- WO-A1-2007/054104
- DE-U1-202004 010 841

## Description

La présente invention concerne de manière générale le pilotage des moteurs de véhicules.

L'invention concerne plus particulièrement un dispositif de pilotage pour un véhicule qui comprend un moteur, des moyens de pilotage du moteur, appelés calculateur contrôle moteur, configurés pour piloter le régime du moteur, un organe de commande du régime moteur, par exemple une pédale d'accélération. Ledit dispositif de pilotage comporte aussi un calculateur, appelé boîtier de servitude, qui comprend un régulateur et/ou limiteur de vitesse de préférence présent d'origine dans le véhicule, et des moyens de communication, de préférence un réseau multiplexé, avec le calculateur contrôle moteur, et un organe de commande dudit régulateur et/ou limiteur de vitesse. L'invention concerne également un véhicule équipé d'un tel dispositif de pilotage.

Les gestionnaires de flottes de véhicules souhaitent que les véhicules puissent être bridés à une vitesse donnée, sans que les autres performances du véhicule soient dégradées et sans que le conducteur puisse modifier la vitesse de bridage.

Il est possible d'interposer un dispositif de pilotage entre l'organe de commande du régime moteur, par exemple la pédale d'accélération, et le calculateur contrôle moteur pour intercepter le signal de l'organe de commande du régime moteur. Compte tenu de la vitesse d'avance du véhicule, on peut évaluer la vitesse d'avance qui correspond au signal émis par l'organe de commande du régime moteur. Le signal intercepté par le dispositif de pilotage peut alors être modifié pour correspondre à une commande de vitesse régulée limitée à une vitesse prédéfinie dans le dispositif de pilotage.

Cependant, pour les véhicules connus dont le boîtier de servitude, encore appelé calculateur central, est muni d'un régulateur et/ou limiteur commandé par un organe de commande de régulateur et/ou limiteur, on constate que lorsque le conducteur actionne l'organe de commande du régulateur ou limiteur de manière à fixer une vitesse de régulation ou de limitation supérieure à ladite valeur limite prédéfinie dans le dispositif de pilotage, les signaux émis par le régulateur ou limiteur du boitier de servitude sont prioritaires. En particulier, les signaux émis par le régulateur ou limiteur du boitier de servitude en direction du calculateur contrôle moteur pour atteindre la vitesse de régulation commandée par l'organe de commande du régulateur, ou pour limiter la vitesse du véhicule, sont prioritaires par rapport aux signaux modifiés de l'organe de commande du régime moteur transmis par le dispositif de pilotage au calculateur contrôle moteur. Il en résulte que, dans le cas d'un régulateur, pour obtenir une vitesse d'avance supérieure à la vitesse dite limite fixée dans le dispositif de pilotage, le conducteur n'a qu'à actionner le régulateur et sélectionner une vitesse de régulation supérieure à ladite vitesse limite prédéfinie dans le dispositif de pilotage. Une solution consiste à supprimer le régulateur et/ou le limiteur de vitesse. Cependant, cette solution n'est pas satisfaisante, car la fonction de régulateur est une fonction très utile et très appréciée par les conducteurs.

En particulier, les dispositifs de pilotage pour véhicules, tels que décrits dans les documents WO 2007/054104 et DE-20 2004 010841, ne permettent pas de brider la vitesse d'un véhicule dont le boîtier de servitude est équipé d'un régulateur et/ou d'un limiteur. En effet, comme expliqué ci-dessus, dans le cas où le boîtier de servitude du véhicule est équipé d'un régulateur, les signaux issus du boîtier de servitude étant prioritaires, il suffit au conducteur qui souhaite atteindre une vitesse donnée de régler l'organe de commande du régulateur à une vitesse de consigne correspondant à la vitesse souhaitée. Le régulateur du boîtier de servitude transmet alors au contrôle moteur des commandes pour atteindre ladite vitesse souhaitée. Ainsi, quand bien même une fonction de bridage serait introduite dans le dispositif de pilotage décrit dans le document WO 2007/054104 ou DE-20 2004 010841, le conducteur pourrait la contourner en jouant sur la commande du régulateur contenu dans le boîtier de servitude.

En outre, les gestionnaires de flottes de véhicules souhaiteraient que leurs véhicules puissent bénéficier de fonctions supplémentaires, aisées à mettre en oeuvre, permettant de faciliter la conduite desdits véhicules notamment pour les personnes handicapées.

La présente invention a pour but de proposer un nouveau dispositif de pilotage, et un véhicule correspondant, permettant de brider la vitesse du véhicule, tout en conservant la possibilité d'utiliser un régulateur et/ou limiteur de vitesse présent dans le boîtier de servitude du véhicule, mais sans que le conducteur puisse faire rouler le véhicule à une vitesse supérieure à la vitesse de bridage.

A cet effet, l'invention a pour objet un véhicule tel que décrit en introduction, caractérisé en ce que le dispositif de pilotage comprend :
- des moyens de récupération de l'information de vitesse d'avance du véhicule,
- des moyens de communication avec l'organe de commande du régime moteur et le calculateur contrôle moteur pour permettre audit dispositif de pilotage d'être interposé entre l'organe de commande du régime moteur et le calculateur contrôle moteur, et,
- des moyens de communication avec l'organe de commande dudit régulateur et/ou limiteur de vitesse et le boîtier de servitude pour permettre audit dispositif de pilotage d'être interposé entre l'organe de commande dudit régulateur et/ou limiteur de vitesse et le boîtier de servitude,
et en ce que ledit dispositif de pilotage comprenant des moyens de bridage de vitesse permettant de prédéfinir une vitesse d'avance maximale autorisée, dite vitesse de bridage,
lesdits moyens de bridage sont configurés pour intercepter les signaux émis par l'organe de commande du régulateur et/ou limiteur et, en fonction des signaux reçus dudit organe de commande du régulateur et/ou limiteur, transmettre lesdits signaux audit régulateur et/ou limiteur ou transmettre audit régulateur et/ou limiteur des signaux modifiés de telle sorte que la vitesse d'avance du véhicule ne dépasse pas ladite vitesse de bridage prédéfinie.

Le dispositif de pilotage selon l'invention permet ainsi de brider la vitesse du véhicule à une vitesse programmée selon la demande, sans dépassement possible de la vitesse de bridage pour le conducteur, même lorsque le véhicule possède un régulateur et/ou limiteur d'origine contenu dans le boîtier de servitude.

Le dispositif de pilotage permet aussi, pour au moins certains véhicules, de réutiliser les organes de commande d'origine de limitation et/ou de régulation lorsque ceux-ci sont présents d'origine, tout en permettant également d'ajouter la fonction de bridage de la vitesse du véhicule à laquelle restent soumises les fonctions de régulation et de limitation de vitesse.

Selon une caractéristique avantageuse de l'invention, les moyens de bridage de vitesse sont configurés pour exécuter les opérations conditionnelles suivantes :
- si le signal de l'organe de commande du régulateur et/ou limiteur de vitesse correspond à une commande de vitesse d'avance du véhicule inférieure à ladite vitesse de bridage, alors lesdits moyens de bridage transmettent ledit signal au régulateur et/ou limiteur,
- si le signal de l'organe de commande du régulateur et/ou limiteur de vitesse correspond à une commande de vitesse d'avance du véhicule supérieure ou égale à ladite vitesse de bridage, alors lesdits moyens de bridage transmettent au régulateur et/ou limiteur un signal modifié, par rapport audit signal reçu, correspondant à une commande de vitesse régulée et/ou limitée à la vitesse de bridage.

Selon une caractéristique avantageuse de l'invention, lesdits moyens de bridage sont également configurés pour intercepter les signaux émis par l'organe de commande du régime moteur et, en fonction des signaux reçus dudit organe de commande du régime moteur, transmettre lesdits signaux au calculateur contrôle moteur, ou transmettre audit calculateur contrôle moteur des signaux modifiés de telle sorte que la vitesse d'avance du véhicule ne dépasse pas ladite vitesse de bridage prédéfinie.

Autrement dit, le dispositif de pilotage selon l'invention forme, d'une part, une première passerelle entre l'organe de commande du régulateur et/ou limiteur et le boitier de servitude, et d'autre part, une deuxième passerelle entre l'organe de commande du régime moteur et le calculateur contrôle moteur.

Ainsi, grâce au dispositif de pilotage selon l'invention, les commandes issues de l'organe de commande du régime moteur et celles issues de l'organe de commande du régulateur et/ou limiteur de vitesse peuvent être interceptées par le dispositif de pilotage de sorte que le bridage de la vitesse du véhicule est opérationnel même lorsque le véhicule comprend un régulateur et/ou limiteur d'origine présent dans le boîtier de servitude.

En effet, le régulateur et/ou limiteur d'origine du véhicule fonctionne normalement tant que l'organe de commande du régulateur et/ou limiteur émet une commande de vitesse inférieure à la vitesse de bridage et le régulateur et/ou limiteur est inhibé lorsque l'organe de commande du régulateur et/ou limiteur émet une commande de vitesse supérieure ou égale à la vitesse de bridage. De manière similaire, le dispositif ne laisse passer les signaux de l'organe de commande du régime moteur au contrôle moteur que si ces signaux correspondent, compte tenu de la vitesse d'avance du véhicule, à une commande de vitesse inférieure à la vitesse de bridage.

Il en résulte qu'il est possible de procéder au bridage de la vitesse du véhicule tout en conservant le régulateur et/ou limiteur de vitesse. Grâce au dispositif selon l'invention, le fonctionnement du régulateur et/ou limiteur reste soumis aux moyens de bridage, de sorte que le conducteur ne puisse faire rouler le véhicule à une vitesse supérieure à la vitesse de bridage.

Selon une caractéristique avantageuse de l'invention, les moyens de bridage de vitesse sont configurés pour exécuter les opérations conditionnelles suivantes :
- si le signal de l'organe de commande de régime moteur correspond à une commande de vitesse d'avance du véhicule inférieure à ladite vitesse de bridage, alors les moyens de bridage de vitesse transmettent le signal de l'organe de commande de régime moteur au calculateur contrôle moteur,
- si le signal de l'organe de commande de régime moteur correspond à une commande de vitesse d'avance du véhicule supérieure ou égale à ladite vitesse de bridage, alors les moyens de bridage de vitesse transmettent au calculateur contrôle moteur un signal modifié, par rapport audit signal reçu, correspondant à une commande de vitesse limitée à la vitesse de bridage.

Selon une caractéristique avantageuse de l'invention, lesdits moyens de récupération de l'information de vitesse d'avance du véhicule sont formés par une interface de connexion à une prise du boîtier de servitude, appelée prise OBD, qui permet notamment d'accéder à l'information de vitesse d'avance du véhicule.

La récupération de l'information de vitesse d'avance par la prise OBD permet d'obtenir une information de vitesse d'avance du véhicule de manière aisée, précise et fiable sans perturber le ou les calculateurs du véhicule.

Selon une caractéristique avantageuse de l'invention, le dispositif de pilotage est aussi muni d'un limiteur de vitesse commandable par un organe de commande, rapporté ou monté d'origine sur le véhicule.

Selon une caractéristique avantageuse de l'invention, ledit dispositif de pilotage est aussi muni d'au moins un organe de commande du régime moteur rapporté, par exemple une pédale d'accélération déportée, distinct de l'organe de commande du régime moteur monté d'origine sur véhicule.

Selon une caractéristique avantageuse de l'invention, ledit dispositif de pilotage comprend des moyens permettant de commander le régime du moteur tout en maintenant le véhicule à l'arrêt,
et ledit dispositif est muni d'un organe de commande desdits moyens de commande du régime moteur.

Selon une caractéristique avantageuse de l'invention, ledit dispositif de pilotage comprend des moyens de régulation et/ou de limitation de la vitesse d'avance à des valeurs prédéfinies. On peut ainsi prévoir de connecter au dispositif de pilotage un organe de commande permettant de sélectionner une vitesse d'avance souhaitée parmi différentes valeurs de vitesse d'avance prédéfinies, par exemple 50, 70, 90, 100, 110, 130 correspondant de préférence aux différentes limitations de vitesse usuelles sur la route.

L'invention concerne aussi un véhicule comprenant :
- un moteur,
- des moyens de pilotage du moteur, appelés calculateur contrôle moteur, configurés pour piloter le régime du moteur,
- un organe de commande du régime moteur, par exemple une pédale d'accélération,
- un calculateur, appelé boîtier de servitude, comprenant un régulateur et/ou limiteur de vitesse, de préférence présent d'origine dans le véhicule, et des moyens de communication, de préférence un réseau multiplexé, avec le calculateur contrôle moteur,
- un organe de commande dudit régulateur et/ou limiteur de vitesse, caractérisé en ce que ledit véhicule comprend en outre un dispositif de pilotage tel que décrit ci-dessus,
et en ce que ledit dispositif de pilotage est interposé, d'une part, entre l'organe de commande du régime moteur et le calculateur contrôle moteur, et, d'autre part, entre l'organe de commande dudit régulateur et/ou limiteur de vitesse et le boîtier de servitude,
et en ce que lesdits moyens de bridage sont configurés pour intercepter les signaux émis par l'organe de commande du régulateur et/ou limiteur et, en fonction des signaux reçus de l'organe de commande du régulateur et/ou limiteur, transmettre lesdits signaux audit régulateur ou transmettre audit régulateur et/ou limiteur des signaux modifiés de telle sorte que la vitesse d'avance du véhicule ne dépasse pas ladite vitesse de bridage prédéfinie.

Selon une caractéristique avantageuse de l'invention, ledit organe de commande du régulateur et/ou limiteur est un organe monté d'origine sur le véhicule, faisant de préférence partie d'un ensemble d'accessoires, appelé commodo.

Selon une caractéristique avantageuse de l'invention, ledit organe de commande du régulateur et/ou limiteur est un organe rapporté.

Le dispositif de pilotage forme un système multitâches pouvant réaliser une ou plusieurs fonctions à la fois. Ledit dispositif peut être réalisé sous la forme d'un calculateur programmé avec un logiciel spécifique. L'installation des organes de commande rapportés et associés audit dispositif peut être réalisée suivant la ou les fonctions à ajouter au véhicule.

Grâce au dispositif de pilotage selon l'invention, le véhicule peut bénéficier de fonctions supplémentaires, aisées à mettre en oeuvre, pour faciliter la conduite des véhicules notamment pour les personnes handicapées.

Les fonctions ajoutées au véhicule grâce au dispositif de pilotage selon l'invention sont réversibles puisqu'il suffit de reprogrammer ou de désactiver le dispositif de pilotage si l'on souhaite retrouver le fonctionnement d'origine du véhicule. Bien entendu, le dispositif est conçu de telle sorte que la reprogrammation ou la désactivation du dispositif de pilotage n'est réalisable que par un opérateur qualifié, sans être accessible au simple conducteur du véhicule.

Le dispositif de pilotage permet également l'ajout d'une télécommande déportée d'aide à la conduite, permettant par exemple la commande des clignotants, feux, essuies et laves glace et klaxon ou d'une commande de régulateur/limiteur et/ou l'ajout d'au moins un ou deux actionneurs d'accélération déportés, tels que cercle, manette, poignée, pédale d'accélérateur à gauche.

L'invention sera bien comprise à la lecture de la description suivante d'exemples de réalisation, en référence aux dessins annexés dans lesquels :
- la figure 1 est une vue schématique de l'architecture d'un véhicule automobile selon l'invention selon un mode de réalisation pour lequel l'organe de commande du régulateur et/ou limiteur est monté d'origine dans le véhicule;
- la figure 2 est une vue schématique de l'architecture d'un véhicule automobile selon l'invention selon un autre mode de réalisation pour lequel l'organe de commande du régulateur et/ou limiteur est rapporté sur le dispositif de pilotage;
- la figure 3 est une vue schématique de l'architecture d'un véhicule automobile selon l'invention selon un autre mode de réalisation pour lequel le dispositif de pilotage comprend des moyens permettant de commander le régime moteur tout en maintenant à l'arrêt ledit véhicule.

En référence aux figures et comme rappelé ci-dessus, l'invention concerne un véhicule comprenant un moteur 1 à combustion interne et un organe 2 de commande du régime moteur. Avantageusement, ledit véhicule est un véhicule automobile, par exemple une voiture ou un camion.

Ledit organe de commande du régime moteur 2 peut être configuré de manière à générer des signaux de type analogiques, Pulse Width Modulation (PWM), ou tout ou rien (TORs), fonctions de la position prise par ledit organe. Préférentiellement, ledit organe est apte à être déplacé sur une course angulaire donnée. Dans l'exemple illustré aux figures, ledit organe de commande du régime moteur 2 est une pédale d'accélération de préférence montée d'origine.

Ledit véhicule comprend des moyens de pilotage 3 du moteur 1, appelés calculateur contrôle moteur, configurés pour piloter le régime du moteur 1.

Ledit véhicule comprend également un ensemble 4 d'organes de commande d'accessoires, appelé commodo. Ledit commodo, encore appelé boitier haut de colonne, se présente sous la forme d'un ensemble monobloc d'organes de commande. Ledit commodo comprend par exemple une manette de commande des clignotants, une manette de commande des feux, une manette de commande des essuies glaces, lave-glaces, et de préférence une manette de commande d'un régulateur de vitesse et/ou une manette de commande d'un limiteur de vitesse.

Ledit véhicule comprend également un calculateur 5, appelé boîtier de servitude intelligent (BSI), qui permet notamment de piloter au moins une partie desdits accessoires du véhicule. Une liaison de communication 53, de préférence un réseau multiplexé, permet audit boîtier de servitude 5 de communiquer avec le calculateur contrôle moteur 3. Ledit boîtier de servitude intelligent peut encore être appelé Unité de Contrôle Habitacle (UCH), ou boîtier électronique central de gestion, et joue le rôle de coordinateur entre les accessoires du véhicule et le calculateur contrôle moteur. En général, l'architecture électrique et électronique du véhicule s'articule autour dudit boîtier de servitude 5, qui centralise et traite les informations issues du réseau.

Les constructeurs utilisent aujourd'hui des réseaux multiplexés pour assurer la communication entre les différents équipements des véhicules afin de remédier à la multiplication des fils électriques. Le principe du multiplexage consiste à relier sur un même bus des équipements dialoguant entre eux. On réduit ainsi la quantité de fils nécessaire et donc le risque de panne électronique. En outre, en cas de panne, la réparation est plus simple. Pour permettre la communication entre ces différents équipements, un protocole de communication définit des règles de transmission, telles que le mode de transmission (analogique ou numérique), le type de code, l'adressage, la détection des erreurs, par exemple.

Le véhicule comprend également un dispositif de pilotage 7 supplémentaire qui se présente sous la forme d'un calculateur muni de moyens de communication. Ledit dispositif de pilotage 7 supplémentaire comprend des moyens de récupération 76 de l'information de vitesse d'avance du véhicule. Lesdits moyens de récupération 76 de l'information de vitesse d'avance du véhicule sont de préférence formés par une interface de connexion 76 à la prise OBD du boîtier de servitude 5.

La connexion matérielle « On Board Diagnostics » (OBD) est composée d'une prise ou connecteur standardisé accessible. Cette prise est standardisée et peut être utilisée comme un moyen de récupération d'informations du véhicule. Différentes informations circulent sur le réseau de la prise OBD, telles que :
- état de la pédale frein,
- état du frein à main,
- état du levier de vitesse,
- état de la pédale d'embrayage,
- position de la pédale d'accélération,
- information de vitesse d'avance du véhicule,
- régime moteur,
- mode du véhicule (éteint, contact, démarrage...),
- informations d'émissions polluantes,
- défauts de fonctionnement.

En variante, la récupération de l'information de vitesse d'avance peut être réalisée sur le bus de données du réseau multiplexé qui relie le dispositif de pilotage 7 au boîtier de servitude 5 lorsque l'information de vitesse d'avance est présente sur ledit bus.

Ledit dispositif 7 est interposé entre ledit organe 2 de commande du régime moteur et ledit calculateur contrôle moteur 3. Ledit dispositif 7 est équipé de moyens de communication 72, 73 avec ledit organe 2 de commande du régime moteur et avec ledit calculateur contrôle moteur 3. Ledit dispositif 7 est également équipé d'autres moyens de communication 74, 80, 81, 82, 83 avec d'autres organes de commande 40, 41, 42.

Comme détaillé ci-après, lesdits autres organes de commande peuvent être des organes montés d'origine ou rapportés sur le véhicule. Lesdits organes de commande rapportés peuvent comprendre un organe de commande d'accélération déporté, un organe de commande de limitation et/ou un organe de commande de régulation de la vitesse du véhicule.

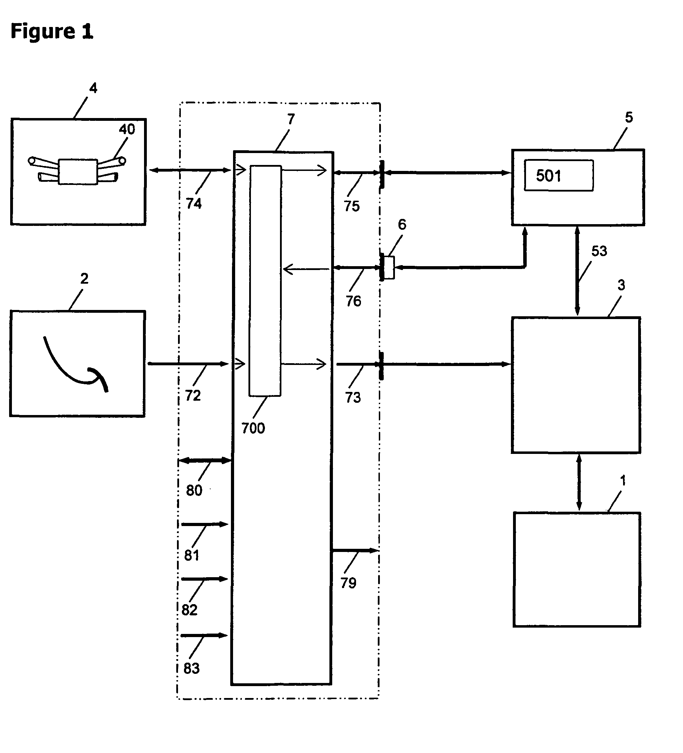

Dans chacun des exemples illustrés aux figures 1 à 3 et détaillés ci-après, ledit véhicule comprend un régulateur et/ou limiteur 501 de vitesse d'avance contenu dans le boîtier de servitude 5 et un organe de commande du régulateur et/ou limiteur qui communique avec ledit dispositif 7 de pilotage par des moyens de communication formés de préférence par un réseau multiplexé. Le régulateur et/ou limiteur de vitesse 501 se présente sous la forme d'un programme contenu dans le boîtier de servitude 5.

Ledit dispositif 7 de pilotage supplémentaire comprend des moyens de bridage 700 de vitesse permettant de prédéfinir une vitesse d'avance maximale dite vitesse de bridage.

Lesdits moyens de bridage 700 sont configurés pour intercepter les signaux émis par l'organe de commande du régulateur et/ou limiteur et, en fonction des signaux reçus de l'organe de commande du régulateur et/ou limiteur, transmettre lesdits signaux au régulateur et/ou limiteur 501, ce qui revient à laisser passer lesdits signaux, ou transmettre audit régulateur et/ou limiteur 501 des signaux modifiés, c'est-à-dire de nouveaux signaux contenant des informations différentes desdits signaux reçus, de telle sorte que la vitesse d'avance du véhicule ne dépasse pas ladite vitesse de bridage prédéfinie.

L'opération consistant à transmettre les signaux reçus correspond à la transmission de signaux identiques à ceux reçus ou de signaux reconditionnés si besoin, par exemple sous une autre norme de codage, mais qui conservent les mêmes informations que les signaux d'origine.

Ledit dispositif de pilotage 7 se présente sous la forme d'un système électronique et/ou informatique, tel qu'une carte électronique de préférence munie d'un microprocesseur et d'une mémoire de travail. Ainsi, lorsque dans la suite de la description, il est précisé que dispositif de pilotage supplémentaire est configuré pour réaliser une opération donnée, cela signifie que le système électronique et/ou informatique correspondant comprend des instructions informatiques permettant de réaliser ladite opération. Les moyens de bridage et les autres fonctions du dispositif sont également réalisés sous la forme de programmes, implémentés dans ledit dispositif de pilotage, qui comprennent des instructions informatiques permettant de réaliser leur fonction.

Les moyens de bridage 700 de vitesse sont notamment configurés pour exécuter les opérations conditionnelles suivantes.

Si le signal de l'organe 2 de commande de régime moteur correspond à une commande de vitesse d'avance du véhicule inférieure à ladite vitesse de bridage, alors les moyens de bridage 700 transmettent le signal de l'organe de commande 2 du régime moteur au calculateur contrôle moteur 3. Si le signal de l'organe 2 de commande de régime moteur correspond à une commande de vitesse d'avance du véhicule supérieure ou égale à ladite vitesse de bridage, alors les moyens de bridage 700 transmettent audit calculateur contrôle moteur 3 un signal modifié, par rapport audit signal reçu, correspondant à une commande de vitesse limitée à la vitesse de bridage.

La commande de vitesse d'avance qui correspond au signal émis par l'organe de commande 2 du régime moteur est calculée par le dispositif de pilotage 7 à partir dudit signal émis et de l'information de vitesse d'avance du véhicule que ledit dispositif 7 récupère, par exemple par la prise OBD.

Ainsi, le dispositif de pilotage supplémentaire selon l'invention permet de brider la vitesse du véhicule, même lorsque celui-ci est équipé d'un régulateur et/ou limiteur présent dans le boîtier de servitude, sans que les autres performances du véhicule soient dégradées et sans que le conducteur puisse modifier la vitesse de bridage.

Selon un mode de réalisation particulier de l'invention illustré à la figure 1, l'organe de commande du régulateur et/ou limiteur est l'organe de commande 40 d'origine du régulateur et/ou limiteur qui fait partie du commodo 4. Ledit dispositif de pilotage 7 supplémentaire est interposé entre le commodo 4 et le boîtier de servitude 5.

Si le signal de l'organe de commande 40 du régulateur et/ou limiteur de vitesse correspond à une commande de vitesse inférieure à ladite vitesse de bridage, alors les moyens de bridage 700 dudit dispositif 7 transmettent ledit signal vers le régulateur et/ou limiteur 501 présent dans le boîtier de servitude 5. Si le signal de l'organe de commande 40 du régulateur et/ou limiteur de vitesse correspond à une commande de vitesse supérieure ou égale à ladite vitesse de bridage, alors les moyens de bridage 700 du dispositif 7 transmettent au régulateur et/ou limiteur 501 du boîtier de servitude 5 un signal modifié, par rapport audit signal reçu, correspondant à une commande de vitesse régulée et/ou limitée à la vitesse de bridage.

Bien entendu, comme rappelé ci-dessus, lorsque les moyens de bridage de vitesse 700 transmettent le signal dudit organe de commande du régulateur et/ou limiteur de vitesse au boîtier de servitude 5, le signal transmis peut présenter un codage différent de celui du signal reçu, mais conserve une information de commande de vitesse qui correspond à celle du signal reçu. Lorsque les moyens de bridage transmettent un signal modifié au boîtier de servitude 5, le signal modifié présente une valeur de commande de vitesse différente de celle qui correspond au signal intercepté par le dispositif 7 de pilotage.

Le régulateur et/ou limiteur 501 du boîtier de servitude 5 transmet alors au calculateur contrôle moteur 3 des commandes permettant de réguler et/ou limiter la vitesse d'avance du véhicule à une valeur qui reste limitée à celle définie par la vitesse de bridage.

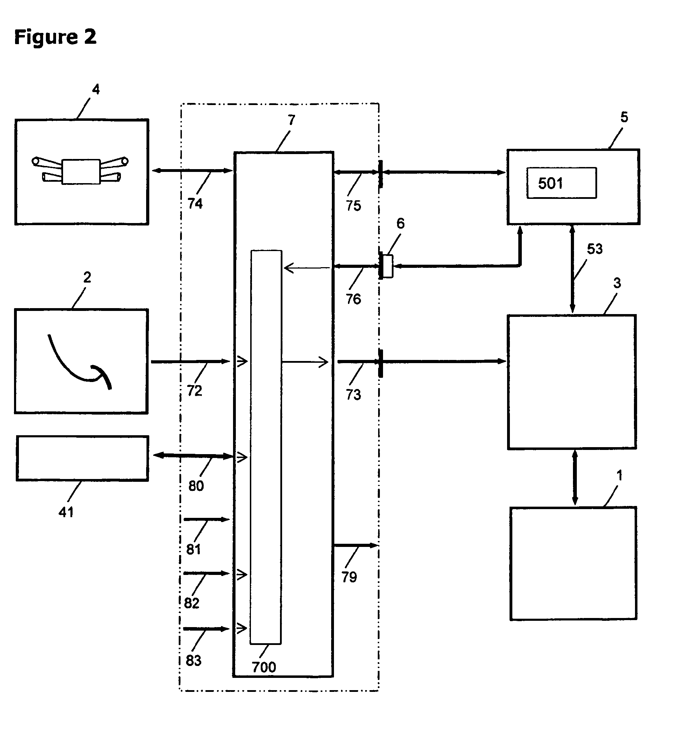

Dans l'exemple illustré à la figure 2, l'organe de commande du régulateur et/ou limiteur de vitesse est un organe de commande 41 rapporté qui communique avec le dispositif de pilotage 7 de préférence par un réseau multiplexé.

Quel que soit le mode de réalisation de l'invention, on peut également prévoir de rapporter, en plus ou à la place de l'organe de commande d'origine du régulateur et/ou limiteur, un autre organe de commande du régulateur et/ou limiteur de vitesse, que l'on connecte au dispositif de pilotage supplémentaire de préférence par un réseau multiplexé 80.

Avantageusement, le dispositif de pilotage est associé à un système de gestion qui permet de sélectionner l'organe de commande de régulation et/ou de limitation que l'on souhaite activer. A cet effet, ledit dispositif 7 de pilotage supplémentaire comprend au moins une interface, de préférence un réseau multiplexé, permettant de connecter ledit système de gestion pour gérer un ou des organes du véhicule dits déportés, autres que les organes du véhicule montés d'origine, connectés au dispositif 7 de pilotage supplémentaire.

Le véhicule peut être équipé d'un limiteur de vitesse monté d'origine ou rapporté. Les moyens de "bridage" de la vitesse se distinguent d'un "limiteur" de vitesse de la manière suivante. Le bridage de la vitesse d'un véhicule interdit au conducteur tout dépassement d'une vitesse préprogrammée dans le dispositif de pilotage supplémentaire. Une fois le véhicule équipé, il ne pourra en aucun cas dépasser cette vitesse de limitation sauf à reprogrammer le dispositif de pilotage supplémentaire qui n'est pas accessible au conducteur. Avec un limiteur de vitesse, le conducteur peut sélectionner sa vitesse de limitation en roulant. Pour sortir de cette limitation de vitesse, il doit généralement effectuer un appui rapide sur l'organe d'accélération ou désactiver le mode limiteur à l'aide de l'organe de commande installé. Avec les moyens de bridage du dispositif selon l'invention, ladite vitesse de limitation reste limitée par la vitesse de bridage prédéfinie dans le dispositif de pilotage par les moyens de bridage.

Avantageusement, on peut prévoir de rapporter un organe de commande du limiteur et/ou du régulateur de vitesse, connecté au dispositif 7 de pilotage supplémentaire, qui dispose de plusieurs boutons, par exemple 5 boutons, correspondant à différentes vitesses de limitation préprogrammées. Les 5 vitesses préprogrammées sont par exemple 50km/h, 70km/h, 90km/h, 110km/h et 130km/h. L'utilisateur pourra sélectionner aisément la vitesse de limitation souhaitée prédéfinie suivant le type de route empruntée.

Ledit dispositif 7 de pilotage supplémentaire comprend au moins une interface 82 permettant de connecter un organe de commande de régime moteur dit rapporté, par exemple une pédale d'accélération déportée, distinct de l'organe 2 de commande du contrôle moteur monté d'origine sur véhicule. Ledit organe de commande de régime moteur rapporté peut être une manette, une poignée, un cercle ou une gâchette d'accélération. En particulier, l'organe de commande de régime moteur rapporté peut être un actionneur d'accélération déporté du côté passager du véhicule, par exemple pour un moniteur auto-école.

Préférentiellement, ledit véhicule comprend un organe de gestion rapporté et connecté au dispositif 7 de pilotage supplémentaire qui permet de sélectionner l'activation d'un organe de commande de régime moteur parmi différents organes de commande de régime moteur équipant le véhicule, par exemple l'organe 2 de commande de régime moteur monté d'origine ou un organe de commande de régime moteur rapporté.

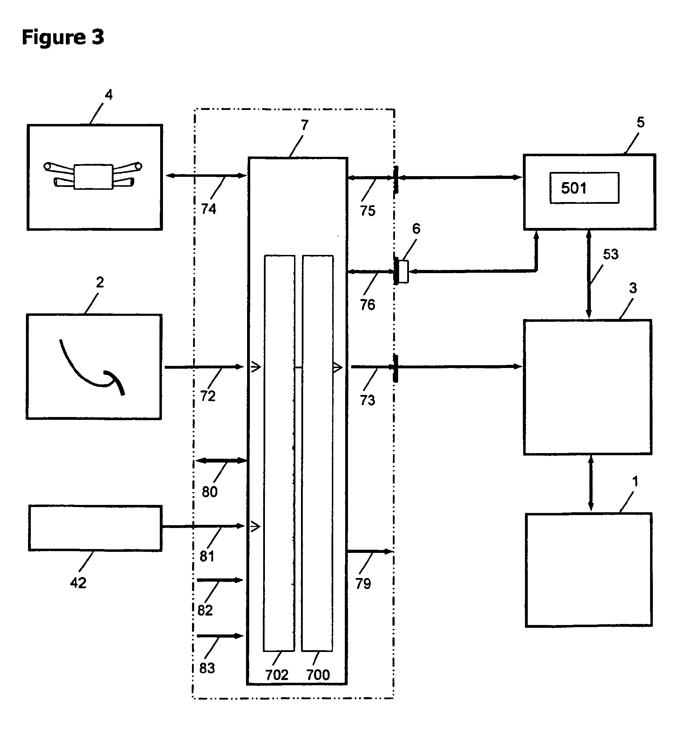

Selon un mode de réalisation particulier de l'invention illustré à la figure 3, éventuellement combinable avec les autres modes de réalisation décrits ci-dessus aux figures 1 et 2, ledit dispositif de pilotage supplémentaire comprend des moyens 702 permettant de réguler le régime du moteur du véhicule, tout en inhibant le ou les organes de commande d'accélération, montés d'origine ou rapportés, du véhicule de manière à recharger la batterie du véhicule tout en empêchant le vol du véhicule. Le régime moteur du véhicule peut être commandé par un organe de commande 42 adapté connecté à une entrée 81 correspondante du dispositif. Une telle fonction du dispositif de pilotage permet de faire varier le régime du moteur indépendamment de l'avance du véhicule.

Comme les autres fonctions décrites ci-dessus, lesdits moyens 702 sont formés par un programme contenu dans le dispositif de pilotage 7.

Avantageusement, lesdits moyens de régulation du régime du moteur sont configurés pour pouvoir être activés lorsque le véhicule est à l'arrêt, c'est-à-dire avec une vitesse d'avance nulle. A cet effet, on peut prévoir que lesdits moyens 702 soient configurés pour récupérer des informations du véhicule, telles que l'état du frein à main et/ou la vitesse d'avance du véhicule. Lesdits moyens 702 permettent d'augmenter le régime moteur du véhicule et d'intercepter les commandes d'accélérations des organes d'origine ou rapportés pour les inhiber. De tels moyens de commande du régime moteur permettent par exemple de faire fonctionner des équipements d'un véhicule, par exemple d'un véhicule de pompier, d'assainissement, ou d'une ambulance, tout en maintenant le véhicule "à l'arrêt", c'est-à-dire avec une vitesse d'avance nulle.

Avantageusement, ledit dispositif 7 de pilotage supplémentaire comprend au moins une entrée de type tout ou rien, permettant de récupérer des états d'actionneurs ou des informations du véhicule, par exemple l'état de la pédale de frein, de la pédale d'embrayage, du point mort de la boîte de vitesse.

Ledit dispositif 7 de pilotage supplémentaire comprend également au moins une entrée 83 permettant de connecter un récepteur infrarouge pour récupérer les informations d'une télécommande déportée d'aide à la conduite. Les informations transmises par la télécommande au dispositif 7 grâce à ladite entrée 83 sont par exemple des informations d'activation/désactivation de clignotants, feux, klaxon, essuie-glaces, lave-glaces et/ou encore des informations d'activation/désactivation du limiteur et/ou du régulateur de vitesse.

Ledit dispositif 7 de pilotage supplémentaire comprend également au moins une sortie 79 permettant de connaitre les états d'activation et de défaillance du dispositif de pilotage supplémentaire. Les informations transmises par cette sortie sont des informations de type tout ou rien.

## Revendications

1. Dispositif de pilotage pour véhicule, ledit véhicule comprenant :
- un moteur (1),
- des moyens de pilotage (3) du moteur, appelés calculateur contrôle moteur, configurés pour piloter le régime du moteur (1),
- un organe (2) de commande du régime moteur, par exemple une pédale d'accélération,
- un calculateur (5), appelé boîtier de servitude, comprenant un régulateur et/ou limiteur (501) de vitesse, de préférence présent d'origine dans le véhicule, et des moyens de communication (53), de préférence un réseau multiplexé, avec le calculateur contrôle moteur (3),
- un organe de commande (40, 41) dudit régulateur et/ou limiteur (501) de vitesse,
**caractérisé en ce que** le dispositif (7) de pilotage comprend :
- des moyens de récupération (76) de l'information de vitesse d'avance du véhicule,
- des moyens de communication (72, 73) avec l'organe (2) de commande du régime moteur et le calculateur contrôle moteur (3) pour permettre audit dispositif de pilotage (7) d'être interposé entre l'organe (2) de commande du régime moteur et le calculateur contrôle moteur (3), et,
- des moyens de communication (74, 75) avec l'organe de commande (40) dudit régulateur et/ou limiteur (501) de vitesse et le boîtier de servitude (5) pour permettre audit dispositif de pilotage (7) d'être interposé entre l'organe de commande (40) dudit régulateur et/ou limiteur (501) de vitesse et le boîtier de servitude (5),
et **en ce que**, ledit dispositif (7) de pilotage comprenant des moyens de bridage (700) de vitesse permettant de prédéfinir une vitesse d'avance maximale autorisée, dite vitesse de bridage,
lesdits moyens de bridage (700) sont configurés pour intercepter les signaux émis par l'organe (40, 41) de commande du régulateur et/ou limiteur (501) et, en fonction des signaux reçus dudit organe de commande (40, 41) du régulateur et/ou limiteur, transmettre lesdits signaux audit régulateur et/ou limiteur (501) ou transmettre audit régulateur et/ou limiteur (501) des signaux modifiés de telle sorte que la vitesse d'avance du véhicule ne dépasse pas ladite vitesse de bridage prédéfinie.

2. Dispositif selon la revendication 1, **caractérisé en ce que** les moyens de bridage (700) de vitesse sont configurés pour exécuter les opérations conditionnelles suivantes :
- si le signal de l'organe de commande (40, 41) du régulateur et/ou limiteur de vitesse correspond à une commande de vitesse d'avance du véhicule inférieure à ladite vitesse de bridage, alors lesdits moyens de bridage (700) transmettent ledit signal au régulateur et/ou limiteur (501),
- si le signal de l'organe de commande (40, 41) du régulateur et/ou limiteur de vitesse correspond à une commande de vitesse d'avance du véhicule supérieure ou égale à ladite vitesse de bridage, alors lesdits moyens de bridage (700) transmettent au régulateur et/ou limiteur (501) un signal modifié, par rapport audit signal reçu, correspondant à une commande de vitesse régulée et/ou limitée à la vitesse de bridage.

3. Dispositif selon l'une des revendications 1 ou 2, **caractérisé en ce que** lesdits moyens de bridage (700) sont également configurés pour intercepter les signaux émis par l'organe (2) de commande du régime moteur et, en fonction des signaux reçus dudit organe (2) de commande du régime moteur, transmettre lesdits signaux au calculateur contrôle moteur (3) ou transmettre audit calculateur contrôle moteur (3) des signaux modifiés de telle sorte que la vitesse d'avance du véhicule ne dépasse pas ladite vitesse de bridage prédéfinie.

4. Dispositif selon la revendication 3, **caractérisé en ce que** les moyens de bridage de vitesse (700) sont configurés pour exécuter les opérations conditionnelles suivantes :
- si le signal de l'organe (2) de commande de régime moteur correspond à une commande de vitesse d'avance du véhicule inférieure à ladite vitesse de bridage, alors les moyens de bridage de vitesse (700) transmettent le signal de l'organe (2) de commande de régime moteur au calculateur contrôle moteur (3),
- si le signal de l'organe (2) de commande de régime moteur correspond à une commande de vitesse d'avance du véhicule supérieure ou égale à ladite vitesse de bridage, alors les moyens de bridage de vitesse (700) transmettent au calculateur contrôle moteur (3) un signal modifié, par rapport audit signal reçu, correspondant à une commande de vitesse limitée à la vitesse de bridage.

5. Dispositif selon l'une des revendications précédentes, **caractérisé en ce que** lesdits moyens de récupération (76) de l'information de vitesse d'avance du véhicule sont formés par une interface de connexion (76) à une prise du boîtier de servitude (5), appelée prise OBD (6), qui permet notamment d'accéder à l'information de vitesse d'avance du véhicule.

8. Dispositif selon l'une des revendications précédentes, **caractérisé en ce que** le dispositif (7) de pilotage comprend également un limiteur de vitesse apte à être commandé par un organe de commande, rapporté ou monté d'origine sur le véhicule.

9. Dispositif selon l'une des revendications précédentes, **caractérisé en ce que** ledit dispositif (7) de pilotage est muni d'au moins un organe de commande du régime moteur rapporté, par exemple une pédale d'accélération déportée, distinct de l'organe (2) de commande du régime moteur monté d'origine sur le véhicule.

10. Dispositif (7) de pilotage selon l'une des revendications 1 à 9, **caractérisé en ce que** ledit dispositif (7) de pilotage comprend des moyens (702) permettant de commander le régime du moteur tout en maintenant le véhicule à l'arrêt,
et **en ce que** ledit dispositif (7) est muni d'un organe de commande (42) desdits moyens (702) de commande du régime moteur.

11. Véhicule comprenant :
- un moteur (1),
- des moyens de pilotage (3) du moteur, appelés calculateur contrôle moteur, configurés pour piloter le régime du moteur (1),
- un organe (2) de commande du régime moteur, par exemple une pédale d'accélération,
- un calculateur (5), appelé boîtier de servitude, comprenant un régulateur et/ou limiteur (501) de vitesse, de préférence présent d'origine dans le véhicule, et des moyens de communication (53), de préférence un réseau multiplexé, avec le calculateur contrôle moteur (3),
- un organe de commande (40, 41) dudit régulateur et/ou limiteur (501) de vitesse,
**caractérisé en ce que** ledit véhicule comprend en outre un dispositif de pilotage (7) conforme à l'une des revendications précédentes,
et **en ce que** ledit dispositif de pilotage (7) est interposé, d'une part, entre l'organe (2) de commande du régime moteur et le calculateur contrôle moteur (3), et, d'autre part, entre l'organe de commande (40) dudit régulateur et/ou limiteur (501) de vitesse et le boîtier de servitude (5),
et **en ce que** lesdits moyens de bridage (700) sont configurés pour intercepter les signaux émis par l'organe (40) de commande du régulateur et/ou limiteur (501) et, en fonction des signaux reçus de l'organe de commande (40) du régulateur et/ou limiteur, transmettre lesdits signaux audit régulateur et/ou limiteur (501) ou transmettre audit régulateur et/ou limiteur (501) des signaux modifiés de telle sorte que la vitesse d'avance du véhicule ne dépasse pas ladite vitesse de bridage prédéfinie.

12. Véhicule selon la revendication 11, **caractérisé en ce que** ledit organe de commande (40) du régulateur et/ou limiteur est un organe monté d'origine sur le véhicule, faisant de préférence partie d'un ensemble d'accessoires (4), appelé commodo.

13. Véhicule selon la revendication 11, **caractérisé en ce que** ledit organe de commande (41) du régulateur et/ou limiteur est un organe rapporté.

## Patentansprüche

1. Steuervorrichtung für ein Fahrzeug, wobei das Fahrzeug umfasst:
- einen Motor (1),
- Steuermittel (3) des Motors, die als Motorsteuerungsrechner bezeichnet werden, die konfiguriert sind, um die Drehzahl des Motors (1) zu steuern,
- ein Steuerorgan (2) der Motordrehzahl, beispielsweise ein Beschleunigungspedal,
- einen Rechner (5), der als Schalteinheit bezeichnet wird, der einen Regler und/oder Begrenzer (501) der Geschwindigkeit umfasst, der vorzugsweise original in dem Fahrzeug vorhanden ist, und Kommunikationsmittel (53), vorzugsweise ein Multiplexnetz, mit dem Motorsteuerungsrechner (3),
- ein Steuerorgan (40, 41) des Reglers und/oder Begrenzers (501) der Geschwindigkeit,
**dadurch gekennzeichnet, dass** die Steuervorrichtung (7) umfasst:
- Rückgewinnungsmittel (76) der Information über die Fahrgeschwindigkeit des Fahrzeugs,
- Kommunikationsmittel (72, 73) mit dem Steuerorgan (2) der Motordrehzahl und dem Motorsteuerungsrechner (3), um der Steuervorrichtung (7) zu erlauben, zwischen dem Steuerorgan (2) der Motordrehzahl und dem Motorsteuerungsrechner (3) zwischengestellt zu sein, und
- Kommunikationsmittel (74, 75) mit dem Steuerorgan (40) des Reglers und/oder Begrenzers (501) der Geschwindigkeit und der Schalteinheit (5), um der Steuervorrichtung (7) zu erlauben, zwischen dem Steuerorgan (40) des Reglers und/oder Begrenzers (501) der Geschwindigkeit und der Schalteinheit (5) zwischengestellt zu sein,
und dadurch, dass. wobei die Steuervorrichtung (7) Drosselmittel (700) der Geschwindigkeit umfasst, die es erlauben, eine maximale erlaubte Fahrgeschwindigkeit zu bestimmen, die als Drosselgeschwindigkeit bezeichnet wird,
die Drosselmittel (700) konfiguriert sind, um die Signale, die von dem Steuerorgan (40, 41) des Reglers und/oder Begrenzers (501) gesendet werden, abzufangen und in Abhängigkeit von den Signalen, die vom dem Steuerorgan (40, 41) des Reglers und/oder Begrenzers empfangen werden, die Signale an den Regler und/oder Begrenzer (501) zu übertragen oder an den Regler und/oder Begrenzer (501) Signale zu übertragen, die derart modifiziert wurden, dass die Fahrgeschwindigkeit des Fahrzeugs nicht die vorbestimmte Drosselgeschwindigkeit überschreitet.

2. Vorrichtung nach Anspruch 1, **dadurch gekennzeichnet, dass** die Drosselmittel (700) der Geschwindigkeit konfiguriert sind, um die folgenden bedingten Vorgänge durchzuführen:
- wenn das Signal des Steuerorgans (40, 41) des Reglers und/oder Begrenzers der Geschwindigkeit einem Befehl für die Fahrgeschwindigkeit des Fahrzeugs entspricht, die unter der Drosselgeschwindigkeit liegt, übermitteln die Drosselmittel (700) das Signal an den Regler und/oder Begrenzer (501),
- wenn das Signal des Steuerorgans (40, 41) des Reglers und/oder Begrenzers der Geschwindigkeit einem Befehl für die Fahrgeschwindigkeit des Fahrzeugs entspricht, die über der Drosselgeschwindigkeit liegt oder dieser entspricht, übermitteln die Drosselmittel (700) an den Regler und/oder Begrenzer (501) ein im Verhältnis zum empfangenen Signal modifiziertes Signal, das einem auf die Drosselgeschwindigkeit regulierten und/oder begrenzten Geschwindigkeitsbefehl entspricht.

3. Vorrichtung nach einem der Ansprüche 1 oder 2, **dadurch gekennzeichnet, dass** die Drosselmittel (700) ebenfalls konfiguriert sind, um die von dem Steuerorgan (2) der Motordrehzahl gesendeten Signale aufzufangen und in Abhängigkeit von den vom Steuerorgan (2) der Motordrehzahl empfangenen Signale die Signale an den Motorsteuerungsrechner (3) zu übertragen oder an den Motorsteuerungsrechner (3) modifizierte Signale zu übertragen, so dass die Fahrgeschwindigkeit des Fahrzeugs die vorbestimmte Drosselgeschwindigkeit nicht überschreitet.

4. Vorrichtung nach Anspruch 3, **dadurch gekennzeichnet, dass** die Drosselmittel (700) der Geschwindigkeit konfiguriert sind, um die folgenden bedingten Vorgänge durchzuführen:
- wenn das Signal des Steuerorgans (2) der Motordrehzahl einem Befehl für die Fahrgeschwindigkeit des Fahrzeugs entspricht, die unter der Drosselgeschwindigkeit liegt, übermitteln die Drosselmittel (700) der Geschwindigkeit das Signal des Steuerorgans (2) der Motordrehzahl an den Motorsteuerungsrechner (3),
- wenn das Signal des Steuerorgans (2) der Motordrehzahl einem Befehl für die Fahrgeschwindigkeit des Fahrzeugs entspricht, die über der Drosselgeschwindigkeit liegt oder dieser entspricht, übermitteln die Drosselmittel (700) der Geschwindigkeit an den Motorsteuerungsrechner (3) ein im Verhältnis zum empfangenen Signal modifiziertes Signal, das einem auf die Drosselgeschwindigkeit begrenzten Geschwindigkeitsbefehl entspricht.

5. Vorrichtung nach einem der vorangehenden Ansprüche, **dadurch gekennzeichnet, dass** die Rückgewinnungsmittel (76) der Information über die Fahrgeschwindigkeit des Fahrzeugs von einer Anschlussschnittstelle (76) an einen Stecker der Schalteinheit (5) gebildet werden, der als OBD-Stecker (6) bezeichnet wird, der insbesondere erlaubt, auf die Information über die Fahrgeschwindigkeit des Fahrzeugs zuzugreifen.

8. Vorrichtung nach einem der vorangehenden Ansprüche, **dadurch gekennzeichnet, dass** die Steuervorrichtung (7) ebenfalls einen Geschwindigkeitsbegrenzer umfasst, der imstande ist, von einem Steuerorgan gesteuert zu werden, das in das Fahrzeug eingebaut oder original montiert wurde.

9. Vorrichtung nach einem der vorangehenden Ansprüche, **dadurch gekennzeichnet, dass** die Steuervorrichtung (7) mit mindestens einem eingebauten Steuerorgan der Motordrehzahl ausgestattet ist, beispielsweise mit einem versetzten Beschleunigungspedal, das sich von dem Steuerorgan (2) der Motordrehzahl unterscheidet, das original in das Fahrzeug eingebaut wurde.

10. Steuervorrichtung (7) nach einem der Ansprüche 1 bis 9, **dadurch gekennzeichnet, dass** die Steuervorrichtung (7) Mittel (702) umfasst, die es erlauben, die Motordrehzahl zu steuern, wobei das Fahrzeug im Stillstand gehalten wird,
und dass die Vorrichtung (7) mit einem Steuerorgan (42) der Steuermittel (702) der Motordrehzahl ausgestattet ist.

11. Fahrzeug, das umfasst:
- einen Motor (1),
- Steuermittel (3) des Motors, die als Motorsteuerungsrechner bezeichnet werden, die konfiguriert sind, um die Drehzahl des Motors (1) zu steuern,
- ein Steuerorgan (2) der Motordrehzahl, beispielsweise ein Beschleunigungspedal,
- einen Rechner (5), der als Schalteinheit bezeichnet wird, der einen Regler und/oder Begrenzer (501) der Geschwindigkeit umfasst, der vorzugsweise original in dem Fahrzeug vorhanden ist, und Kommunikationsmittel (53), vorzugsweise ein Multiplexnetz, mit dem Motorsteuerungsrechner (3),
- ein Steuerorgan (40, 41) des Reglers und/oder Begrenzers (501) der Geschwindigkeit,
**dadurch gekennzeichnet, dass** das Fahrzeug ferner eine Steuervorrichtung (7) nach einem der vorangehenden Ansprüche umfasst,
und dass die Steuervorrichtung (7) einerseits zwischen dem Steuerorgan (2) der Motordrehzahl und dem Motorsteuerungsrechner (3) und andererseits zwischen dem Steuerorgan (40) des Reglers und/oder Begrenzers (501) der Geschwindigkeit und der Schalteinheit (5) zwischengestellt ist,
und dass die Drosselmittel (700) derart konfiguriert sind, um die Signale, die von dem Steuerorgan (40) des Reglers und/oder Begrenzers (501) gesendet werden, abzufangen und die Signale in Abhängigkeit von den Signalen, die vom Steuerorgan (40) des Reglers und/oder Begrenzers empfangen werden, an den Regler und/oder Begrenzer (501) zu übertragen oder an den Regler und/oder Begrenzer (501) Signale zu übertragen, die derart modifiziert wurden, dass die Fahrgeschwindigkeit des Fahrzeugs nicht die vorbestimmte Drosselgeschwindigkeit überschreitet.

12. Fahrzeug nach Anspruch 11, **dadurch gekennzeichnet, dass** das Steuerorgan (40) des Reglers und/oder Begrenzers ein Organ ist, das original im Fahrzeug eingebaut ist, das vorzugsweise Teil der Zubehörgruppe (4) ist, die als Commodo bezeichnet wird.

13. Fahrzeug nach Anspruch 11, **dadurch gekennzeichnet, dass** das Steuerorgan (41) des Reglers und/oder Begrenzers ein eingebautes Organ ist.

## Claims

1. A piloting device for a vehicle, said vehicle comprising:
- an engine (1),
- piloting means (3) for the engine, called engine control computer, configured to pilot the speed of the engine (1),
- a control member (2) controlling the engine speed , for example an acceleration pedal,
- a computer (5), called central unit, comprising a speed regulator and/or limiter (501), preferably originally present in the vehicle, and communication means (53), preferably a multiplex network, communicating with the engine control computer (3),
- a control member (40, 41) for said speed regulator and/or limiter (501),
**characterized in that** the piloting device (7) comprises:
- means (76) for recovering speed information of the vehicle,
- communication means (72, 73) communicating with the engine speed control member (2) and the engine control computer (3) to allow said piloting device (7) to be inserted between the engine speed control member (2) and the engine control computer (3), and
- communication means (74, 75) communicating with the control member (40) of said speed regulator and/or limiter (501) and the central unit (5) to allow such a piloting device (7) to be inserted between the control member (40) of said speed regulator and/or limiter (501) and the control unit (5),
and **in that**, said piloting device (7) comprising speed limiting means (700) making it possible to predefine a maximum allowed speed, called the limiting speed,
said limiting means (700) are configured to intercept the signals transmitted by the control member (40, 41) of the regulator and/or limiter (501) and, as a function of the signals received from said control member (40, 41) of the regulator and/or limiter, transmit said signals to the regulator and/or limiter (501) or transmit, to said regulator and/limiter (501), modified signals such that the forward speed of the vehicle does not exceed said predefined limiting speed.

2. The device according to claim 1, **characterized in that** the speed limiting means (700) are configured to carry out the following conditional operations:
- if the signal from the control member (40, 41) of the speed regulator and/or limiter corresponds to a speed command of the vehicle below said limiting speed, then said limiting means (700) send a signal to the regulator and/or limiter (501),
- if the signal from the control member (40, 41) of the speed regulator and/or limiter corresponds to a speed command of the vehicle above or equal to said limiting speed, then said limiting means (700) send the regulator and/or limiter (501) a modified signal, relative to said received signal, corresponding to a regulated and/or limited speed command at the limiting speed.

3. The device according to one of claims 1 or 2, **characterized in that** said limiting means (700) are also configured to intercept the signals transmitted by the control member (2) of the engine speed and, as a function of the signals received from said control member (2) of the engine speed, to transmit said signals to the engine control computer (3) or to transmit, to said engine control computer (3), modified signals such that the speed of the vehicle does not exceed said predefined limiting speed.

4. The device according to claim 3, **characterized in that** the speed limiting means (700) are configured to perform the following conditional operations:
- if the signal from the engine speed control member (2) corresponds to a speed command of the vehicle below said limiting speed, then the speed limiting means (700) transmit the signal from the engine speed control member (2) to the engine control computer (3),
- if the engine speed control member (2) corresponds to a speed command of the vehicle above or equal to said limiting speed, then the speed limiting means (700) transmit, to the engine control computer (3), a modified signal relative to said received signal, corresponding to a speed command limited to the limiting speed.

5. The device according to one of the preceding claims, **characterized in that** said means (76) for recovering speed information of the vehicle are formed by a connection interface (76) to a plug of the control unit (5), called OBD plug (6), which in particular makes it possible to access the speed information of the vehicle.

8. The device according to one of the preceding claims, **characterized in that** the piloting device (7) also comprises a speed limiter capable of being controlled by a control member, attached or originally mounted on the vehicle.

9. The device according to one of the preceding claims, **characterized in that** said piloting device (7) is provided with at least one attached engine speed control member, for example an offset accelerator pedal, separate from the engine speed control member (2) originally mounted on the vehicle.

10. The piloting device (7) according to one of claims 1 to 9, **characterized in that** the piloting device (7) comprises means (702) making it possible to command the speed of the engine while keeping the vehicle stopped,
and **in that** said device (7) is provided with a control member (42) for said engine speed control means (702).

11. A vehicle comprising:
- an engine (1),
- piloting means (3) for the engine, called engine control computer, configured to pilot the speed of the engine (1),
- a control member (2) controlling the engine speed, for example an acceleration pedal,
- a computer (5), called central unit, comprising a speed regulator and/or limiter (501), preferably originally present in the vehicle, and communication means (53), preferably a multiplex network, communicating with the engine control computer (3),
- a control member (40, 41) for said speed regulator and/or limiter (501),
**characterized in that** said vehicle also comprises a piloting device (7) according to one of the preceding claims,
and **in that** said piloting device (7) is inserted between the engine speed control member (2) and the engine control computer (3) on the one hand, and between the control member (40) of said speed regulator and/or limiter (501) and the central unit (5) on the other hand,
and **in that** said limiting means (700) are configured to intercept signals transmitted by the control member (40) of the regulator and/or limiter (501) and, as a function of the signals received from the control member (40) of the regulator and/or limiter, to transmit said signals to said regulator and/or limiter (501) or to transmit, to said regulator and/or limiter (501), modified signals such that the speed of the vehicle does not exceed said predefined limiting speed.

12. The vehicle according to claim 11, **characterized in that** said control member (40) of the regulator and/or limiter is a member originally mounted on the vehicle, preferably part of an accessory assembly (4), called combination control.

13. The vehicle according to claim 11, **characterized in that** said control member (41) of the regulator and/or limiter is an attached member.
